Europäisches Patentamt

European Patent Office

Office européen des brevets

(19)

(11) Numéro de publication: **0 267 068 B1**

# FASCICULE DE BREVET EUROPEEN

(12)

(45) Date de publication de fascicule du brevet:
**12.06.91**

(21) Numéro de dépôt: **87402163.7**

(22) Date de dépôt: **29.09.87**

(51) Int. Cl.⁵: **F01L 7/02**, F01L 7/16,
F16H 27/06

(54) **Dispositif de distribution rotatif à distribution rotative discontenue en céramique composite et utilisation de ce dispositif dans des moteurs à combustion interne, des compresseurs à piston ou des appareils à fonctionnement par pulsion, notamment des pulsoréacteurs.**

(30) Priorité: 29.09.86 FR 8613525
12.12.86 FR 8617439
12.12.86 FR 8617438
12.12.86 FR 8617440

(43) Date de publication de la demande:
**11.05.88 Bulletin 88/19**

(45) Mention de la délivrance du brevet:
**12.06.91 Bulletin 91/24**

(84) Etats contractants désignés:
**AT BE CH DE ES FR GB GR IT LI LU NL SE**

(56) Documents cités:
DE-A- 3 303 229       DE-C- 410 737
FR-A- 779 407         FR-A- 853 149
FR-A- 885 513         FR-A- 980 923
FR-A- 1 573 321       FR-A- 1 602 082
FR-A- 2 553 469       GB-A- 1 028 451
GB-A- 1 479 578       GB-A- 2 102 878

PATENT ABSTRACTS OF JAPAN, vol. 9, no.
282 (M-428)[2005], 9 novembre 1985; & JP-
A-60 125 712 (YUUKI TSUKAMOTO)

05-07-1985

(73) Titulaire: **INNOLAB**
**21, Avenue Victor Hugo**
**F-75116 Paris(FR)**

(72) Inventeur: **Berger, Michel**
**104, La Lande**
**F-33480 Castelnau-de-Médoc(FR)**

(74) Mandataire: **Portal, Gérard et al**
**Cabinet Beau de Loménie 55, rue d'Amster-**
**dam**
**F-75008 Paris(FR)**

**Description**

L'invention concerne essentiellement un dispositif de distribution rotatif, à distribution rotative discontinue, et l'utilisation de ce dispositif pour la distribution des moteurs à combustion interne ou des compresseurs à piston.

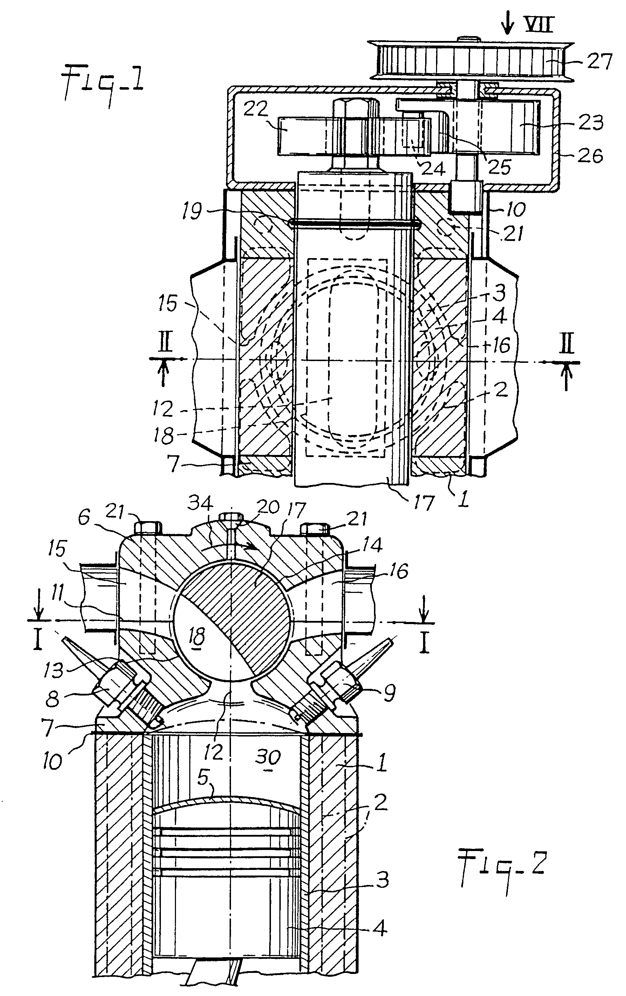

On connaît par le document FR-A-1 474 890 un dispositif de distribution forcée d'un fluide depuis une canalisation dite d'admission à une canalisation dite d'échappement par l'intermédiaire d'une chambre de traitement pouvant comprendre une compression, par exemple par la présence d'un piston 4, comprenant un élément distributeur 8 monté rotatif dans un élément de culasse A qui comporte au moins trois ouvertures non alignées communiquant entre elles, dont une ouverture d'admission 6 communiquant librement avec la canalisation d'admission, une ouverture intermédiaire 5 communiquant librement avec la chambre de traitement et une ouverture d'échappement 7 communiquant librement avec la canalisation d'échappement. L'élément distributeur 8 comprend une lumière 9 ne donnant accès à la chambre de traitement, lors de sa rotation, qu'à une seule canalisation à la fois (voir les figures 1 à 5).

L'élément distributeur 8 est animé d'un mouvement de rotation continu en toute circonstance et est disposé dans la culasse de manière à assurer par friction l'étanchéité parfaite entre la chambre de traitement et les canalisations d'admission et d'échappement (page 1, lignes 17 à 25). L'étanchéité peut être renforcée par l'adaptation de segments 10. Ce dispositif utilisé dans ce document pour l'admission et l'évacuation des gaz de moteurs d'explosion, la chambre de traitement constituant alors une chambre d'explosion dans laquelle est disposé un piston 4 classique des moteurs explosion. On prévoit en outre dans la culasse un orifice pour l'insertion d'un élément d'allumage 11. Il est indiqué que le dispositif s'adapte parfaitement aux moteurs à combustion interne, deux temps, diesel, et à tout type de carburant (page 2, lignes 7-9).

Le document FR-A-2 090 414 décrit un dispositif de distribution similaire dont la culasse (7) se compose de deux parties permettant l'usinage de tout l'ensemble, plus le serrage indépendant, la culasse étant réalisée en aluminium spécial, tandis que l'arbre (1) et les bagues (2 et 8) sont en fonte spéciale afin de réduire le coefficient de frottement au minimum et de résoudre les problèmes de dilatation.

Le document FR-A-2 184 209 concerne encore un dispositif de distribution similaire utilisé indifféremment pour des moteurs combustion interne (à explosion interne) ainsi que des compresseurs ou pompes. On y souligne que dans le dispositif assurant les mêmes fonctions, les systèmes employés (clapet ou soupape commandés par un arbre à came, avec souvent plusieurs intermédiaires) freinent les fluides en imposant un obstacle à leur cheminement vers la chambre de la culasse, ou vers l'extérieur. De plus, le mouvement alternatif de ces systèmes représente une inertie importante dégradant le rendement de l'ensemble et limitant le régime de fonctionnement tandis que les chocs répétés offrent un risque de détérioration de ces éléments (page 1, lignes 4 à 12).

L'utilisation d'un élément distributeur rotatif permet d'éviter ces inconvénients tandis que les éléments peuvent être traités de manière à travailler en milieu corrosif, ce qui permet de limiter la pollution des moteurs explosion en acceptant un mélange moins riche afin de réduire la quantité d'oxyde de carbone.

Le document FR-A-2 417 636 décrit encore un dispositif de distribution rotatif utilisé dans des moteurs à quatre temps tout à fait similaires, dans lequel l'élément distributeur est animé encore une fois d'un mouvement rotatif continu autour d'un axe horizontal perpendiculaire à celui du cylindre du moteur. Le distributeur tourne avantageusement à une vitesse égale à la moitié de celle de l'arbre moteur (voir revendication 4).

D'autres documents d'enseignement similaire sont FR-A-429 121 ; FR-A-779 407 ; GB 1 479 578 ou GB-2 102 878 ; FR-A-429 121 décrit un sabot de contre-pressions recevant une pression proportionnelle à celle du cylindre pour améliorer l'étanchéité.

Ainsi, on peut observer que tous les dispositifs antérieurement connus réalisent une rotation continue de l'élément distributeur.

Une telle distribution continue présente les inconvénients suivants :

- la section utile de l'ouverture de la chambre, notamment de compression, servant à l'admission ou à l'échappement n'est pas de section constante pendant le trajet efficace du piston pendant les temps d'admission et d'échappement, en raison de la rotation continue de l'élément distributeur ;
- les systèmes antérieurement décrits font en général appel à des chemises amovibles entourant les cylindres ainsi qu'à une rotation continue du système de valve rotative ouvrant et fermant les ouvertures, en synchronisme avec la rotation du vilebrequin.

Tout ceci résulte en de nombreux inconvénients dont les principaux consistent en une efficacité moindre de la distribution, en un moindre rendement, notamment thermique.

Par ailleurs, on connaît par le document FR-A-1 573 321 Henvaux des moteurs à combustion interne à dispositif distributeur à rotation discontinue par l'emploi d'un système d'entraînement en rotation discontinue à croix de Malte. Un tel dispositif n'a pas trouvé d'application pratique en raison de l'impossibilité d'obtenir l'étanchéité nécessaire et une vitesse de rotation suffisante avec les matériaux métalliques ou alliages utilisés pour réaliser de tels moteurs. En outre, la croix de Malte 5 est commandée par un plateau circulaire 2 pourvu de deux doigts 3 et 3[1] de sorte que le fonctionnement du moteur a lieu avec une modification de la section de l'ouverture de la chambre, notamment de compression, qui n'est donc plus constante pendant toute la période active nécessaire, ce qui constitue un inconvénient majeur.

Dans le document JP-A-60-17 216, on a tenté de résoudre le problème de l'étanchéité en réalisant la soupape de distribution rotative comprenant une partie fixe 6 à une partie rotative 12, réalisées en céramique.

Ceci permet de limiter la dilatation thermique en évitant une perte d'étanchéité. Egalement, la friction est faible entre les surfaces, ce qui permet de se passer d'un lubrifiant.

Cependant, le problème majeur des céramiques est qu'elles ne résistent pas longtemps à des vitesses de rotation élevées, ainsi qu'au choc thermique inhérent au fonctionnement des moteurs. Leur durée de vie est donc excessivement limitée pour une utilisation à l'échelle industrielle.

La présente invention a donc pour but de résoudre un nouveau problème technique consistant en la fourniture d'une solution permettant de tirer parti au mieux du dispositif de distribution rotatif du type discontinu, principalement par le maintien de la section de l'ouverture de la chambre, notamment de compression, constante pendant sensiblement toute la période active nécessaire, notamment la période active du piston disposé dans la chambre pour réaliser la compression.

La présente invention a encore pour but de fournir une solution permettant de tirer parti de l'amélioration du fonctionnement du dispositif de distribution rotatif du type discontinu pour la distribution des moteurs à combustion interne ou pour la distribution de compresseurs à piston, incluant les pompes.

La présente invention a encore pour but de résoudre le nouveau problème technique consistant à réduire au minimum le nombre de pièces constituant le dispositif de distribution.

La présente invention a encore pour but de résoudre le nouveau problème technique consistant en la fourniture d'une solution permettant d'obtenir un dispositif de distribution qui a une très grande résistance mécanique, notamment en torsion et à la rupture, une très haute résistance thermique même à des très hautes températures de l'ordre de plus de 2 000°C, voire atteignant 3 000°C, et assurant une friction étanche sans absorption d'énergie et sans graissage et pratiquement sans usure.

Tous ces problèmes techniques sont résolus par la présente invention pour la première fois d'une manière particulièrement simple, aisée à mettre en oeuvre et d'un coût avantageux.

Selon un premier aspect, la présente invention fournit un dispositif céramique de distribution forcée d'un fluide depuis une canalisation dite d'admission à une canalisation dite d'échappement par l'intermédiaire d'une chambre de traitement pouvant comprendre une compression, comprenant un élément distributeur monté rotatif dans un élément de culasse qui comporte au moins trois ouvertures non alignées communiquant entre elles, dont une ouverture d'admission communiquant librement avec la canalisation d'admission, une ouverture intermédiaire communiquant librement avec ladite chambre de traitement et une ouverture d'échappement communiquant librement avec la canalisation d'échappement, ledit élément distributeur comprenant une lumière ne donnant accès à la chambre de traitement lors de sa rotation qu'à une seule canalisation à la fois, ainsi que des moyens de commande en rotation caractérisé en ce que l'élément de culasse est réalisé en un premier matériau céramique composite armé de fibres en structure trois dimensions et l'élément distributeur est réalisé en un second matériau céramique composite armé de fibres orientées bidimensionnellement.

Selon un mode de réalisation, les fibres du premier matériau céramique composite sont choisies parmi le groupe consistant de fibres de carbure de silicium, de carbure de silicium et de titane, de bore, de carbone, ou leurs mélanges, ces fibres étant enrobées dans une matrice choisie parmi le groupe consistant avantageusement de carbure de silicium, de graphite, de carbone ou leurs mélanges.

Selon une autre caractéristique de l'invention, les fibres orientées dibimensionnellement du second matériau sont choisies parmi le groupe consistant de fibres de carbure de silicium, de zircone, d'alumine ($Al_2O_3$), ou de mélange d'oxyde d'aluminium et d'oxyde de silicium ($Al_2O_3$-$SiO_2$).

Selon encore une autre caractéristique de l'invention, le premier matériau céramique composite précité a une densité comprise entre 1 et 1,5.

Selon encore une autre caractéristique de l'invention, le dispositif est réalisé en un second matériau céramique composite précité à une densité comprise entre 1,5 et 2.

De tels matériaux céramiques composites présentent les caractéristiques essentielles d'une résistance mécanique élevée à haute température, d'un faible coefficient de dilatation, d'une faible densité, tandis que les dilatations thermiques sont égales entre les éléments fixes et mobiles. Leur résistance au choc physique et thermique est très élevée ainsi que leur résistance aux vibrations à diverses fréquences de rotation. Enfin, aucune lubrification n'est nécessaire. Les matériaux céramiques avantageusement utilisables selon l'invention seront décrits plus en détail plus loin.

Il résulte de ce qui précède que la culasse est réalisée en un premier matériau céramique composite armé de fibres en structure trois dimensions. Ces fibres peuvent être avantageusement des fibres tissées en trois dimensions en carbure de silicium ou en carbure de silicium et de titane, ou encore en bore, ou encore en carbone, tandis que la matrice peut être également réalisée en carbure de silicium, en graphite ou encore en carbone. On peut préparer ces fibres orientées selon les trois dimensions spatiales X-Y-Z selon le procédé décrit dans la demande française antérieure FR-85-19 436.

Selon une autre caractéristique avantageuse de l'invention, l'élément distributeur peut être réalisé en un second matériau céramique composite armé de fibres orientées dibimensionnellement, avantageusement selon le procédé décrit dans la demande antérieure FR-84-14 800 qui est également incorporé ici par référence. Avantageusement, la nature des fibres tissées en deux dimensions est choisie parmi le groupe consistant de carbure de silicium, de zircone ($ZrO_2$), d'alumine ou de mélange d'oxyde d'aluminium et d'oxyde de silicium ($Al_2O_3$-$SiO_2$). La matrice dans laquelle sont baignées les fibres est avantageusement choisie parmi le groupe consistant de zircone ($ZrO_2$), d'alumine ($Al_2O_3$) ou encore de mélange d'oxyde d'aluminium et de silicium ($Al_2O_3$-$SiO_2$).

Selon un autre aspect, l'invention concerne également l'utilisation du dispositif précédemment décrit soit pour la distribution des moteurs à combustion interne, soit encore pour la distribution de compresseurs à piston, incluant les pompes, soit encore pour la distribution d'appareils à fonctionnement par pulsions, notamment des pulso-réacteurs. On comprend ainsi que l'invention réalise une distribution rotative faisant office de vanne ou soupape composée d'un système rotatif à rotation discontinue permettant une ouverture d'admission ou d'échappement de section constante pendant sensiblement tout le trajet efficace du piston, et en particulier pendant les deux temps d'admission et d'échappement d'un moteur à cycle de quatre temps et à fermeture constante pendant les deux autres temps (compression et détente).

Ce système à rotation discontinue est commandé par un simple mécanisme faisant appel à une croix de Malte et à une commande rotative par un seul doigt de croix de Malte, comme ceci est appliqué dans les projecteurs cinématographiques et a fait depuis longtemps ses preuves de fiabilité et de fixité. Il s'agit donc d'une application totalement nouvelle, aboutissant à des avantages techniques particulièrement inattendus et non évidents pour un homme du métier. On observera que ce mouvement discontinu permet l'ouverture des orifices d'admission et d'échappement pendant le trajet exact et efficace du piston lors de sa course entre le point mort haut et le point mort bas dû au déplacement linéaire du piston relié à un système rotatif par l'intermédiaire d'une bielle. En outre, grâce à l'utilisation de céramique composite pour réaliser la culasse, ainsi que de préférence l'élément distributeur ou roto-distributeur, on obtient une très grande résistance mécanique notamment en torsion et rupture, une très haute résistance thermique à de très hautes températures de l'ordre de plus de 2 000° C ainsi qu'une friction étanche sans absorption d'énergie et sans graissage et pratiquement sans usure. D'autre part, il n'y a pas de diffusion thermique par conductibilité thermique ou par convexion grâce à la grande inertie thermique des céramiques composites. Le système de distribution selon l'invention a une montée en températures beaucoup plus lente grâce au refroidissement de l'élément distributeur rotatif qui en même temps véhicule les gaz frais et les gaz chauds. Selon l'invention, les ouvertures présentent une très grande section et réalisent un écoulement parfait des gaz frais et des gaz brûlés, ce qui aboutit à une consommation moindre, à un rendement plus élevé et à une pollution moindre.

- On diminue grandement la difficulté d'écoulement des gaz frais et des gaz chauds lors de l'admission et de l'échappement, respectivement, ce qui permet d'aboutir à une amélioration sensible du rendement thermique, en particulier dans le cas d'utilisation avec des moteurs à combustion interne.

D'autre part, quelle que soit la vitesse de rotation, la section de l'ouverture est rigoureusement maintenue constante pendant tout le temps de l'ouverture ou de la fermeture et ce également quelle que soit la température.

- Enfin, et par rapport aux anciens moteurs à soupapes classiques, il n'y a plus de phénomène d'affolement des soupapes et également plus de limitation du taux de compression alors que les soupapes qui pénétraient dans la chambre de combustion limitaient le taux de compression, en particulier dans le cas des moteurs diesel, le taux de compression peut donc devenir très élevé avec la présente invention.

On peut encore ajouter ici que le dispositif selon l'invention réduit le nombre total des pièces qui atteint seulement 5 pièces, soit :

1) - le carter de croix de Malte

2) - la croix de Malte

3) - l'arbre et le doigt unique de croix de Malte

4) - l'élément distributeur ou roto-distributeur

5) - la poulie d'entraînement.

Le dispositif étant beaucoup moins lourd, par exemple est envircn 10 fois moins lourd que sur les moteurs à soupapes classiques, dans le cas où il est réalisé en céramique composite, ceci aboutit à un bilan largement positif malgré le coût des céramiques relativement aux métaux ou alliages.

L'invention ci-dessus décrite procure des avantages techniques déterminants, on a observé que l'onde de choc produite par l'allumage et la détente des gaz a tendance à pousser les gaz entre la culasse et le roto-distributeur, ce qui peut conduire à des coups de feu d'impact sur le roto-distributeur et à un affaiblissement, voire à une perte de l'étanchéité.

Ainsi, selon un premier perfectionnement, la présente invention a pour but de résoudre encore un nouveau problème technique consistant en la fourniture d'une solution permettant de renvoyer ou repousser l'onde de choc, produite au moment de l'allumage et de la détente des gaz, sur la tête de piston, c'est-à-dire à l'opposé du roto-distributeur, et ce d'une manière très simple, limitant les coûts de fabrication.

Ce nouveau problème technique est résolu pour la première fois de manière satisfaisante par la présente invention.

Ainsi, selon la présente invention, on fournit un dispositif de distributeur du type ci-dessus décrit pour l'invention principale, caractérisé en ce que l'élément distributeur comprend des moyens de résonance disposés en coïncidence avec l'ouverture de communication avec la chambre de traitement lorsque le piston est au point mort haut juste avant la détente. Dans le cas de moteurs, la chambre est le cylindre.

Selon un mode de réalisation préféré, ces moyens de résonance comprennent une saignée ou cavité de résonance, qui est avantageusement disposée dans le sens longitudinal de l'élément distributeur.

Selon encore une autre caractéristique de l'invention, la forme de cette saignée ou de cette cavité de résonance est sensiblement parabolique.

Grâce à cette structure, on aboutit, au moment de l'allumage et de la détente des gaz, à un renvoi sur la tête de piston de l'onde de choc qui se répand normalement sur toutes les parois et qui aurait donc tendance à pousser les gaz entre la culasse et le roto-distributeur. Ainsi, les moyens de résonance selon l'invention permettent de repousser l'onde de choc sur la tête de piston, de diminuer la poussée sur la friction roto-distributeur-culasse et d'améliorer ainsi l'étanchéité, et enfin d'éviter les coups de feu d'impact sur le roto-distributeur.

On a également pu observer que selon l'invention le roto-distributeur tourne d'une manière très étanche, ce qui donne lieu à une friction très dure.

Ainsi, selon un deuxième perfectionnement, la présente invention a pour but de résoudre encore un nouveau problème technique consistant en la fourniture d'une solution permettant de diminuer de manière considérable la résistance de friction du roto-distributeur dans la culasse tout en maintenant l'étanchéité parfaite lors du fonctionnement d'un tel dispositif. Cette solution doit être également de conception particulièrement simple.

La présente invention fournit pour la première fois une solution satisfaisante à ce problème technique.

Ainsi, selon la présente invention, on fournit un dispositif de distribution forcée d'un fluide depuis une canalisation dite d'admission et une canalisation dite d'échappement par l'intermédiaire d'une chambre de traitement pouvant comprendre une compression, comprenant un élément distributeur monté rotatif dans un élément de culasse qui comporte au moins trois ouvertures non alignées communiquant entre elles, dont une ouverture d'admissicn communiquant librement avec la canalisation d'admission, une ouverture intermédiaire communiquant librement avec ladite chambre de traitement et une ouverture d'échappement communiquant librement avec la canalisation d'échappement, ledit élément distributeur comprenant une lumière ne donnant accès à la chambre de traitement, lors de sa rotation, qu'à une seule canalisation à la fois, caractérisé en ce que l'élément distributeur rotatif dit roto-distributeur est disposé dans la culasse sans ajustage ; et en ce qu'il comprend un ou avantageusement plusieurs segments d'étanchéité disposés dans des logements correspondants prévus dans la culasse.

Avantageusement, les segments précités sont appliqués contre l'élément roto-distributeur avec une poussée fournie par un organe de poussée unilatérale disposé dans ledit logement.

Selon une autre caractéristique du dispositif selon l'invention, celui-ci comprend trois segments disposés à 120° l'un de l'autre.

Avantageusement, ces segments sont plus longs que la lumière de distribution de l'élément roto-distributeur afin, cela va de soi, de ne pas tomber en fond de lumière au moment où celle-ci se présente devant les segments.

Selon une autre caractéristique de l'invention, un segment est disposé dans la partie supérieure de la culasse, de manière à être accessible de l'extérieur, tandis que, de préférence, l'organe de poussée de ce segment disposé dans la partie supérieure de la culasse comprend des moyens de réglage de la poussée exercée par le segment sur l'élément roto-distributeur.

De préférence, les segments d'étanchéité sont réalisés en céramique composite armées de fibres, de préférence tissées à une dimension choisie parmi le groupe consistant de fibres en carbure de silicium, en carbone ou en mélange d'oxyde d'aluminium, de silicium et de magnésium ($Al_2O_3$-$SiO_2$-$MgO$), tandis que la matrice dans laquelle sont incorporées les fibres est choisie parmi le groupe consistant d'une matrice en graphite, en carbone, ou en titane ou en alliage de titane comme un alliage titane-aluminium. Les organes de poussée sont simplement constitués par des ressorts, de préférence formés par une ou plusieurs lamelles ondulées type "Ondulex".

On conçoit ainsi que la résistance de friction que pourrait donner l'ajustage du roto-distributeur dans la culasse sans segments our obtenir l'étanchéité est considérablement diminuée puisque seules les trois surfaces des trois segments rentrent en friction. D'autre part, l'étanchéité de ce système est totale, même aux très fortes pressions au moment de la détente, et peut facilement résister à plus de 100 bars, comme cela se fait par l'étanchéité due aux segments du piston.

De manière également totalement inattendue, ce système, si les matériaux choisis sont très compatibles, ne demande pas de graissage. C'est pourquoi il est préféré d'utiliser un roto-distributeur réalisé en céramique composite avec des segments réalisés aussi en céramique composite.

Dans la structure de l'invention, le doigt unique de croix de Malte, solidaire de l'arbre vilebrequin, est de position fixe, de sorte que l'avance ou le retard à l'ouverture ou à la fermeture est fixé une fois pour toutes.

Or, il est bien connu que le moment d'ouverture et de fermeture de soupapes d'admission et/ou d'échappement dans un moteur thermique devrait varier sur une période idéale en fonction de la vitesse de rotation du moteur.

On sait également que ceci est rigoureusement impossible avec les arbres à cames habituels dont les bossages sont calés une fois pour toutes.

Certaines solutions on été par ailleurs proposées mais elles sont toutes d'une réalistion très complexe impliquant des coûts de fabrication très élevés.

Ainsi, selon un troisième perfectionnement, la présente invention a pour but de résoudre encore un nouveau problème technique consistant en la fourniture d'un dispositif de distribution rotatif permettant de faire varier l'avance ou le retard à l'ouverture ou à la fermeture des soupapes d'admission et/ou d'échappement à volonté, notamment en fonction de la vitesse de rotation du moteur, et ce d'une manière tout à fait simple, limitant les coûts de fabrication.

La présente invention permet de résoudre ce nouveau problème technique pour la première fois d'une manière satisfaisante.

Ainsi, selon la présente invention, on fournit un dispositif de distribution forcée d'un fluide depuis une canalisation dite d'admission et une canalisation dite d'échappement par l'intermédiaire d'une chambre de traitement pouvant comprendre une compression, comprenant un élément distributeur monté rotatif dans un élément de culasse qui comporte au moins trois ouvertures non alignées communiquant entre elles, dont une ouverture d'admission communiquant librement avec la canalisation d'admission, une ouverture intermédiaire communiquant librement avec la chambre de traitement et une ouverture d'échappement communiquant librement avec la canalisation d'échappement, l'élément distributeur comprenant une lumière ne donnant accès à la chambre de traitement, lors de sa rotation, qu'à une seule canalisation à la fois, des moyens de commande en rotation discontinue de l'élément distributeur étant prévus et comprenant un ensemble mécanique à croix de Malte comprenant une croix de Malte proprement dite solidaire de l'élément distributeur et un doigt unique de croix de Malte solidaire d'un arbre du vilebrequin, caractérisé en ce qu'il comprend des moyens pour faire roter le doigt de la croix de Malte.

Avantageusement, ces moyens permettent de faire roter le doigt selon un fragment de circonférence dont le centre coïncide de préférence avec l'axe de rotation du tambour portant le doigt.

Selon une autre caractéristique préférée de l'inventin, ces moyens pour faire roter le doigt sont commandés par des moyens de commande réagissant à la vitesse de rotation du moteur.

Selon un premier mode de réalisation particulier, ces moyens pour faire roter le doigt comprennent un chemin circonférentiel formant came réalisé dans le tambour précité tandis que le doigt réalisé sous forme d'un élément suiveur de came est monté déplaçable dans ledit chemin circonférentiel par l'action des moyens de commande précités.

Les moyens de commande précités peuvent être réalisés sous forme d'une commande manuelle ou automatique pouvant inclure un système optique, un système à dépression, un système centrifuge, un système électromécanique, etc.

Les moyens de commande de ce type, qui sont capables de réagir à la vitesse de rotation du moteur, sont bien connus à l'homme de l'art et n'ont pas besoin d'être décrits plus en détail ici.

On conçoit ainsi qu'en faisant roter le doigt de la croix de Malte entre des positions distinctes d'une position initiale, on peut modifier à volonté l'avance ou le retard à l'ouverture ou à la fermeture selon le point de rotation où se trouve l'élément distributeur rotatif ou élément roto-distributeur, ce en fonction de la vitesse de rotation du moteur, ce qui permet d'améliorer son rendement thermique de manière appréciable.

En outre, étant donné que ce rotage du doigt se fait selon un fragment de circonférence dont le centre coïncide avec l'axe de rotation du tambour précité, la distance entre l'arbre du vilebrequin et l'axe de la poulie du doigt de croix de Malte reste inchangée, ce qui permet une tension constante de la courroie crantée transmettant le mouvement de l'arbre du vilebrequin à l'arbre du tambour portant le doigt de la croix de Malte.

On obtient ainsi un avantage inattendue de réglage supplémentaire du fonctionnement de ce dispositif de distribution.

D'autres buts, caractéristiques et avantages de l'invention apparaîtront clairement à la lumière de la description explicative qui va suivre en référence au dessin annexé représentant le mode de réalisation actuellement préféré de l'invention donné simplement à titre d'illustration et qui ne saurait donc en aucune façon limiter la portée de l'invention. Dans les dessins :

- la figure 1 est une vue en coupe selon la ligne de trace I-I de la figure 2 d'un dispositif de distribution selon l'invention utilisé pour la distribution d'un moteur à combustion interne, ici à quatre temps ;
- la figure 2 est une vue en coupe selon la ligne de trace II-II de la figure 1 ;
- les figures 3 à 6 représentent successivement les positions de l'élément distributeur pour chaque temps du cycle de fonctionnement du moteur à quatre temps, la figure 3 représentant le premier temps du cycle (admission, A) ; la figure 4 le deuxième temps du cycle (compression, C) ; la figure 5 le troisième temps du cycle (détente, B) ; et la figure 6 le quatrième temps du cycle (échappement, E) ;
- la figure 7 représente une vue latérale selon la flèche VII de la figure 1 ;
- la figure 8 représente respectivement en I, II, III les positions successives de l'élément distributeur ou roto-distributeur en fonction de la rotation de la croix de Malte ; et
- la figure 9 représente les courbes développées d'ouverture et de fermeture de la chambre de compression exprimées en pourcentage de surface, en fonction du temps avec positionnement du point mort bas et du point mort haut du piston.
- la figure 10 est une vue en coupe, similaire à celle de la figure 2, d'un premier perfectionnement du dispositif de distribution selon l'invention utilisé pour la distribution d'un moteur à combustion interne, ici à quatre temps, avec le piston situé au point mort haut (PMH) ;
- la figure 11 est une vue en coupe d'un second perfectionnement du dispositif de distribution selon l'invention dans l'utilisation préférée d'un moteur à combustion interne, ici quatre temps, cette vue étant similaire à celle de la figure 2 ;
- la figure 12 est une vue en coupe longitudinale montrant un segment dans son logement avec son organe de poussée constitué par une lame ressort ondulée ;
- la figure 13 représente un troisième perfectionnement de l'invention selon une vue latérale similaire à celle de la figure 7.
- la figure 14 représente un quatrième perfectionnement de l'invention relatif à des segments d'étanchéité disposés de manière à s'appliquer sur le roto-distributeur et à déboucher dans la chambre de compression ; et
- la figure 15 représente séparément et en perspective le segment d'étanchéité selon ce quatrième perfectionnement de l'invention.

Nous allons maintenant décrire ce système :

En référence aux figures 1 et 2, on peut voir le bloc cylindre classique d'un moteur, les traits pointillés 2 symbolisant les volumes dans lesquels circule le liquide de refroidissement (type de refroidissement qui peut être éventuellement supprimé avec le genre de moteur qui va être décrit). En 3, la chemise intérieure du cylindre, cette chemise pouvant elle-même être en céramique selon le procédé déjà revendiqué. En 4, le piston avec ses segments qui peut éventuellement être recouvert d'une pastille céramique en 5 procurant une plus grande efficacité thermique à l'explosion et une meilleure tenue thermique de la tête de piston.

Ce bloc moteur est coiffé par la culasse en céramique formée de 2 demi-culasses 6 et 7, la culasse du bas portant, comme nous le voyons ici, 2 bougies 8 et 9 par cylindre. Une seule bougie pourrait grandement suffire mais la réalisation d'un tel moteur permet de mettre facilement 2 bougies. Ceci peut être une grosse amélioration dans la rapidité et la qualité d'allumage des gaz et, de plus, peut permettre la fabrication de moteurs homologués pour des applications spécifiques telles que l'aéronautique qui impose un double allumage dans les moteurs d'avions.

En 10, nous voyons le joint de culasse et, en 11, le joint éventuel placé entre les 2 demi-culasses, ce joint permettant de réaliser avec une grande précision l'étanchéité entre la culasse et le roto-distributeur. La demi-culasse inférieure comporte une ouverture centrale en 12 débouchant sur un demi-palier en 13, la demi-culasse du haut comportant également un demi-palier en 14, chacun de ces demi-paliers débouchant eux-mêmes sur 2 sorties latérales 15 et 16 ayant une section de forme rectangulaire à peu près identique au conduit 12 pratiqué dans la demi-culasse inférieure et mettant en liaison les 2 sorties 15 et 16, ce conduit 12 ayant avantageusement une section légèrement inférieure pour faciliter l'écoulement des gaz selon la position de l'arbre roto-distributeur 17 servant de vanne ouvrant successivement, come nous venons de le voir, les orifices 15 et 16.

Cet arbre roto-distributeur est ouvert selon une section en demi-lune 18 figure 2 qui a une longueur sur l'arbre égale à la longueur de l'ouverture 12. En 19 figure 1, est représenté un ensemble gorge et joint sevant de sécurité à l'étanchéité de l''ensemble et de blocage longitudinal du distributeur. En 20, nous voyons un conduit avec un bouchon de fermeture dont le but est d'injecter le produit de glaçage et anti-friction entre la partie fixe culasse et l'arbre roto-distributeur. A titre d'exemple, on citera : le molybdène, le bore et le graphite.

En 21, se trouvent placés des goujons chargés de la jonction des 2 demi-culasses. Il faut signaler ici que les 2 demi-culasses sont en céramique destinée à supporter de très hautes températures et de fortes pressions lors des cycles Compression et Détente, comme nous le verrons plus loin.

Selon l'invention, on préfère que les céramiques utilisées pour réaliser la culasse soient les céramiques précédemment énoncées, à savoir un matériau céramique composite ayant de préférence une densité comprise entre 1 et 1,5, avantageusement armé avec des fibres tissées en trois dimensions conformément au procédé décrit dans la demande de brevet FR-85 19436, ces fibres étant choisies dans le groupe consistant de préférence de carbure de silicium, carbure de silicium et de titane, du bore, du carbone, ou leurs divers mélanges. Ces fibres sont avantageusement enrobées dans une matrice réalisée en carbure de silicium, en graphite, en carbone, ou leurs mélanges.

De telles céramiques supportent facilement des températures comprises entre 2 000 et 3 000°C alors que, pendant la marche du moteur, la température de la culasse n'excède pas en général 1 100 à 1 200°C. Ainsi, on obtient une marge de sécurité importante.

L'arbre roto-distributeur 17 a une rainure en demi-lune, et est également avantageusement réalisé en céramique composite, ayant de préférence une densité comprise entre 1,5 et 2. De telles céramiques composites sont de préférence armées avec des fibres tissées avantageusement en deux dimensions, de préférence selon un procédé décrit dans la demande de brevet FR-84 14800. Les fibres tissées en deux dimensions sont avantageusement réalisées en carbure de silicium, ou en zircone, ou en alumine, en mélange d'oxyde d'aluminium et de silicium ($Al_2O_3$-$SiO_2$). Toutes ces fibres sont naturellement disponibles commercialement. La matrice utilisée pour enrober les fibres est de préférence choisie parmi le groupe consistant de zircone, d'alumine ou de mélange d'oxyde alumine-oxyde de silicium ($Al_2O_3$-$SiO_2$). De telles matrices sont également disponibles commercialement.

L'utilisation d'une telle matrice en céramique composite à fibres orientées fournit un matériau capable de résister à tous les efforts de traction et de déformation hélicoïdale selon l'axe de rotation, tandis que la dureté au choc de l'arbre roto-distributeur 17 est supérieure à celle de la culasse.

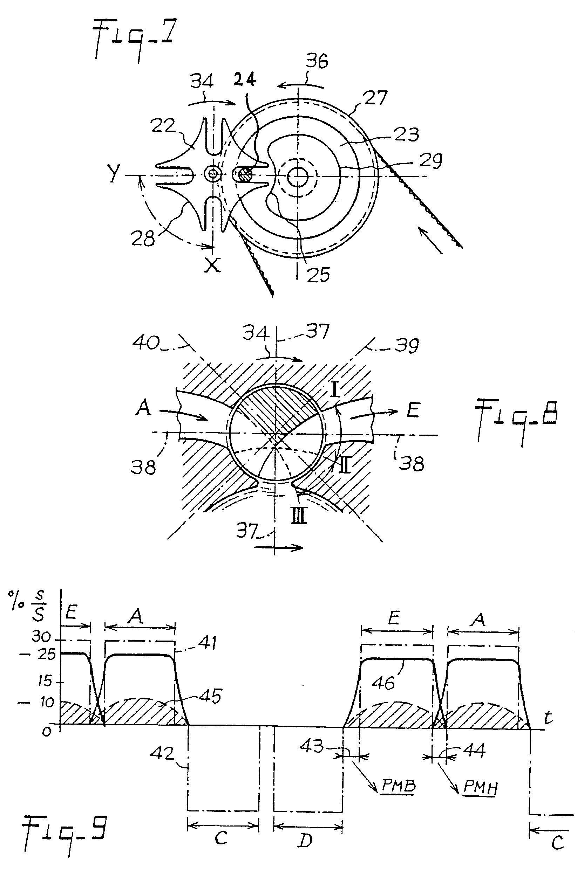

Cet arbre échancré est solidaire à une de ses extrémités d'une croix de Malte en 22 schématisée figure 7 Planche (3-3). Cette croix de Malte est actionnée par un tambour 23 comportant un doigt 24 unique placé dans l'évidement 25. Cet ensemble croix de Malte et doigt unique est placé à l'intérieur d'un carter étanche 26 rempli d'huile. Le tambour 23 est lui-même commandé en 27 par une poulie crantée reliée directement au vilebrequin par une courroie crantée, la vitesse de rotation de cette poulie étant le double de celle du vilebrequin.

Ce système de croix de Malte très connu en mécanique et employé couramment dans les projecteurs cinématographiques a pour but de donner à l'arbre solidaire de la croix un mouvement rotatif discontinu alors que la poulie porte-doigt a, elle, un mouvement rotatif continu. Lorsque cette poulie fait un tour, il est très compréhensible, en regardant la figure 7, que la croix de Malte fait 1/4 de tour engendré par le déplacement du doigt unique dans une des 4 fentes de la croix et qui est effectué en 1/4 du temps et, pendant les 3/4 de ce même temps, la croix de Malte est immobilisée, la partie concave 28 de celle-ci servant de palier à la partie convexe du porte-doigt 29. L'importance du doigt unique est fondamentale pour le fonctionnement du moteur.

Ainsi, ce système est connu en cinématographie mais son application dans les dispositifs de distribution rotative est entièrement nouvelle et procure les avantages techniques précités inattendus non évidents pour l'homme du métier de la distribution rotative.

Maintenant, voyons ce que ce système permet d'obtenir et comment fonctionne ce roto-distributeur et, ensuite, nous verrons les courbes d'ouverture et de fermeture que ce système permet d'obtenir.

Planche (2-3), en coupe nous voyons figure 3, figure 4, figure 5 et figure 6, les 4 positions d'un système de vannes d'un moteur thermique 4 temps. Pour la compréhension, nous ne numéroterons pas à nouveau les différents organes constituant cette culasse et l'arbre roto-distribution puisque nous le retrouvons facilement sur les figures 1 et 2, mais nous numéroterons seulement les positions des différents temps du moteur (1), (2), (3), (4).

Donc, figure 3, l'arbre se trouve dans une position telle, 17a, que l'ouverture d'Admission 15 amenant les gaz frais en 21 (comburant + carburant) se trouve en communication directe avec la chambre de combustion 30. Cette ouverture de grande section, grâce au système de croix de Malte engendrant un mouvement discontinu, est constante pendant toute la descente du piston (temps d'Admission). Ceci représnte le temps (1).

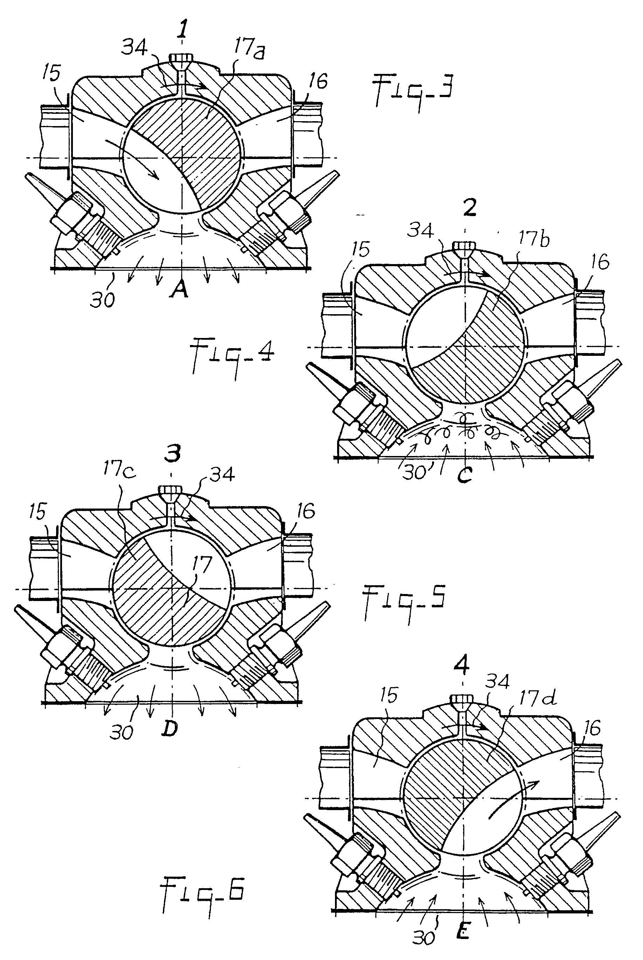

Figure 4, nous voyons le temps (2) où, après un temps de rotation très rapide, l'arbre roto-distributeur est venu s'immobiliser dans la position 17b, obturant complètement l'ouverture de la culasse du bas et cette immobilisation dans cette position reste pendant tout le temps (2) où le piston remonte en comprimant les gaz.

En figure 5, nous voyons le temps (3) où, toujours par le système de croix de Malte, après une rotation de 1/4 de tour rapide, le roto-distributeur vient s'immobiliser en position 17c obturant toujours l'orifice situé dans la culasse inférieure. A ce moment, la ou les bougies sont allumées et c'est le temps de Détente où les gaz augmentant considérablement de volume génèrent une poussée sur le piston (seul temps moteur du cycle à 4 temps).

Figure 6, encore une fois par la rotation rapide de 1/4 de tour de l'arbre roto-distributeur, nous passons au temps (4) et l'arbre vient s'immobiliser en position 17d plaçant son échancrure de telle manière qu'elle mette en contact la chambre de combustion avec l'ouverture d'évacuation des gaz 16 et permettant ainsi l'éjection des gaz brûlés. C'est le temps d'Echappement.

Nous revenons à la figure 7 pour montrer que la croix de Malte faisant tourner l'arbre par 1/4 de tour en mouvement discontinu tourne dans le sens inverse de la poulie 23 porteuse du doigt 24, comme on le voit selon les flèches 34 et 36, respectivement.

Dans toutes les positions représentées sur les figures précitées, le sens de rotation de l'arbre roto-distributeur est indiqué par une flèche dans le sens 34, sens des aiguilles d'une montre et, ceci, à titre d'exemple, l'ensemble pouvant aussi bien fonctionner en sens inverse.

L'étanchéité arbre-culasse pourrait être renforcée par des segments rectilignes placés le long de l'arbre dans des gorges usinées à cet effet, bien que cela ne se soit pas avéré nécessaire.

Nous voyons maintenant figure 8 un schéma montrant que, pendant la rotation continue d'un tour du plateau portant le doigt, la croix de Malte, elle, n'a fait que 1/4 de tour pendant un temps très court (1/4 du temps) et qu'elle a été immobilisée les 3/4 du temps. Ce 1/4 de temps de rotation de la croix de Malte s'inscrit à cheval sur le déplacement de l'arbre entre 2 temps, ce qui revient à dire que, lorsque l'arbre se trouve immobilisé soit en ouverture, soit en fermeture de l'orifice des culasses, il est immobilisé pendant les 3/4 du temps et qu'il est venu roter en 1/8 de ce même temps, c'est-à-dire moitié du temps total de déplacement qui est de 1/4 du temps.

Figure 8, nous voyons une figure explicative de ce qui précède.

En 37 et 38, nous voyons les axes montrant les 4 positions de l'arbre pendant les 4 temps d'un même cycle et, en 39 et 40, les axes pouvant être considérés comme les rayons en ouverture demi-lune du roto-distributeur.

De la position I à la position II, cette ouverture représente l'immobilisation du roto-distributeur pendant les 3/4 de la durée totale d'un temps et représente 1/4 de ce même temps pour passer de la position II à la position III. Ce 1/4 de temps représente donc le 1/4 de temps de course d'un piston divisé en 2 fois 1/8, c'est-à-dire la position haute (P.M.H.) plus la position basse (P.M.B.), puisque les 3/4 du temps d'immobilisation se font pendant le déplacement du piston. Ceci est obtenu en calant le positionnement de l'arbre par rapport au vilebrequin d'une manière adéquate.

On voit donc, toujours figure 8, que le roto-distributeur est passé de I à III, c'est-à-dire de la position Echappement (E) à la position Admission (A), ce qui représente le 1/4 du cycle 4 temps ou 1 temps.

Figure 9, nous voyons des courbes représentant le cycle 4 temps selon les traits mixtes 41 en haut de l'abscisse symbolisant les temps d'ouverture, c'est-à-dire A et E, et 42 dans la partie inférieure de l'abscisse symbolisant les 2 temps de fermeture, Compression et Détente.

La distance 43 entre ces signaux carrés en traits mixtes représnte le point mort bas et en 44 le point mort haut qui, selon le diagramme de communication des mouvements d'une bielle sur un vilebrequin, représnte pratiquement 1/8 de la rotation totale en haut et en bas, soit 1/4 de la totalité de la rotation d'un tour de vilebrequin ce qui, heureuse coïncidence, correspond exactement au même découpage du cycle obtenu par le mouvement discontinu de croix de Malte. Il s'agit encore d'un avantage totalement inattendu de l'invention.

Figure 9, en ordonnée, nous voyons marqué le pourcentage de surface d'ouverture de l'orifice placé dans la culasse. Ce pourcentage est le rapport de la section (s) de cette ouverture par rapport à la section (S) du piston et, dans le système revendiqué ici, on voit que nous avons 25 % de surface d'ouverture par rapport à la section du piston alors que, dans la plupart des systèmes classiques et dans le meilleur des cas, il n'y en a que 10 %. C'est pourquoi, dans les moteurs à soupapes classiques on double, pour certains types de moteurs, le nombre de soupapes d'échappement et le nombre de soupapes d'dmission, ce qui augmente le nombre de pièces et la force antagoniste due aux nombreux ressorts de soupapes. De plus, dans tous les systèmes soit à soupapes, soit à distributeur rotatif, chemises, arbres ajourés, etc., le mouvement étant continu, la section d'ouverture n'est jamais constante et nous voyons ici, schématisée en 45, la courbe bien connue d'ouverture des soupapes dans un cycle 4 temps, alors que par le système revendiqué ici, nous obtenons une horizontale parfaite puisque l'ouverture est constante pendant tout le temps de déplacement, 46 c'est-à-dire efficace du piston, le déplacement de 1/4 de tour du roto-distributeur se faisant pendant le point mort haut et le point mort bas.

On peut donc dire que, dans le système revendiqué ici et grâce à la forme et à la surface des ouvertures, il n'y a pratiquement pas de freinage à l'écoulement aérodynamique des gaz aussi bien à l'admission des gaz frais qu'à la sortie des gaz brûlés et que, de plus, la surface de section et la constante d'ouverture permettent une amélioration considérble du rendement du moteur qui peut être de 20 % supérieur aux systèmes connus tout en diminuant l'élévation thermique.

Il faut également constater que le système de distribution à l'Admission et à l'Echappement étant le même, l'échauffement dû aux gaz d'échappement est compensé par le refroidissement dû aux gaz d'admission et que la température moyenne de l'arbre est bien inférieure à celle des soupapes dans les moteurs classiques, ce qui est également un très gros avantage.

Pour en terminer avec la théorie du principe, signalons toujours que, pour un moteur à 4 temps, la croix de Malte doit faire 4 fois 1/4 de tour pendant que le vilebrequin fait 2 tours (1/2 tour par temps). L'arbre porteur du doigt et qui commande la croix doit tourner 2 fois plus vite que le vilebrequin et le roto-distributeur tourne donc, lui, 2 fois moins vite que le vilebrequin puisqu'il fait un tour pendant que le vilebrequin fait 2 tours, ce qui est encore un avantage car, par rapport à un arbre à cames classique, le roto-distributeur tourne 2 fois moins vite.

Une étanchéité suffisante a été observée lors des essais qui ont été effectués alors que le dispositif fonctionnait sans segment (s), ce qui représente un avantage technique déterminant totalement inattendu pour un homme du métier.

Le procédé et le dispositif de l'invention peuvent être utilisés dans de nombreux domaines où des problèmes de distribution se posent. En particulier on citera les moteurs à combustion interne, les compresseurs à piston, incluant les pompes, les appareils à fonctionnement par pulsion, notamment les pulso-réacteurs.

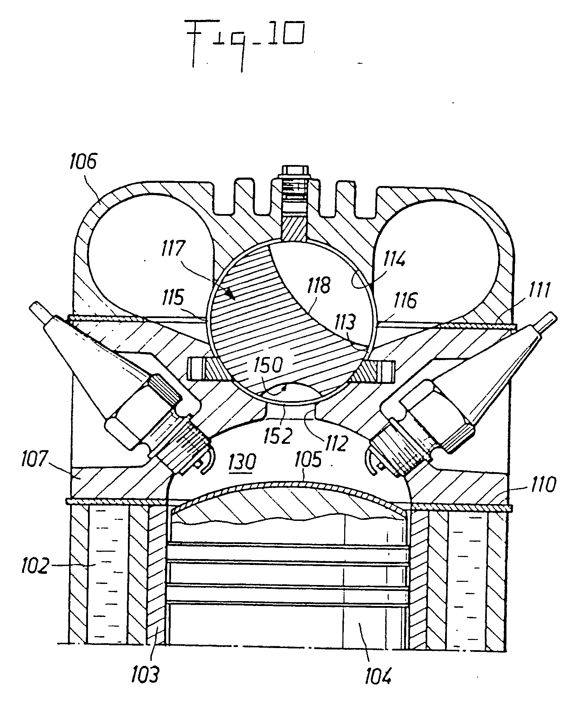

Selon un premier perfectionnement, et en référence à la figure 10 où les numéros de référence ont été augmentés de 100 pour les pièces similaires, on peut voir le bloc-cylindres classique d'un moteur, comportant des volumes 102 dans lesquels circule le liquide de refroidissement (type de refroidissement qui peut être éventuellement supprimé avec le genre de moteur qui va être décrit). En 103, on a représenté la chemise intérieure du cylindre, cette chemise pouvant elle-même être en céramique. En 104, le piston avec ses segments qui peut éventuellement être recouvert d'une pastille céramique 105 procurant une plus grande efficacité thermique à l'explosion et une meilleure tenue thermique de la tête de piston.

Ce bloc-moteur est coiffé par la culasse en céramique formée de deux demi-culasses 106 et 107, la culasse du bas (107) portant, comme cela est clairement visible, par exemple deux bougies 8 et 9 par cylindre. Une seule bougie pourrait grandement suffire, mais la réalisation d'un tel moteur permet de mettre facilement deux bougies, comme décrit en références aux figures 1 à 9.

En 110, est représenté le joint de culasse et en 111 le joint permettant de réaliser avec une grande précision l'étanchéité entre la culasse et l'élément distributeur rotatif ou roto-distributeur repéré par le numéro de référence général 117. La demi-culasse inférieure comporte une ouverture centrale 112 débouchant sur un demi-palier en 113, la demi-culasse du haut 106 comporte également un demi-palier en 114, chacun de ces demi-paliers débouchant eux-mêmes sur deux sorties latérales 115 et 116 communiquant avec des conduits d'admission A et d'échappement E. La section des sorties latérales 115 et 116 peut être sensiblement identique tout en étant légèrement inférieure à celle de l'ouverture centrale 112 pour faciliter l'écoulement des gaz selon la position de l'arbre roto-distributeur 117 servant de vanne ouvrant successivement les orifices 115 et 116.

Cet arbre roto-distributeur 117 comprend une lumière 118 ne donnant accès à la chambre de combustion 130, lors de sa rotation, qu'à une seule canalisation à la fois soit l'admission, soit l'échappement. La forme de cette lumière 118 peut être en demi-lune.

Selon la présente invention, l'élément distributeur 117 ou roto-distributeur est caractérisé en ce qu'il comprend des moyens de résonance 150 disposés en coïncidence avec l'ouverture 112 de communication avec la chambre de traitement 130 lorsque le piston de compression est au point mort haut (PMH) juste avant la détente, c'est-à-dire dans la position représentée à la figure unique. De préférence, ces moyens de résonance 150 comprennent une saignée 152 ou cavité de résonance. Avantageusement, la forme de cette saignée 152 ou cavité de résonance est sensiblement parabolique, comme représenté dans la figure unique, cette forme faisant partie intégrante de l'invention.

Avantageusement, l'élément roto-distributeur 117 est animé d'un mouvement de rotation discontinu conformément à ce qui est précédemment décrit, notamment par un système à croix de Malte. On a en effet pu observer que les moyens de résonance selon l'invention 150 produisaient un effet de synergie particulièrement inattendu dans le cadre d'une rotation discontinue de l'élément roto-distributeur 117, alors que l'avantage apporté par la présence de ces moyens de résonance 150 était plus limité dans le cadre d'une rotation continue de l'élément roto-distributeur 117.

Le fonctionnement est strictement identique à ce qui a été décrit précédemment avec l'obtention des avantages précédemment mentionnés inhérents à la présence des moyens de résonance 150, à savoir le fait de renvoyer sur la tête de piston 104, notamment sur la pastille céramique 105, hautement réfractaire, les gaz chauds accompagnés de l'onde de choc, en diminuant ainsi la poussée sur la friction roto-distributeur 117-culasse, en améliorant ainsi l'étanchéité, et en évitant les coups de feu d'impact sur le roto-distributeur 117.

On comprend ainsi que l'invention permet d'apporter des perfectionnements techniques déterminants, tout à fait inattendus et non évidents pour l'homme de l'art.

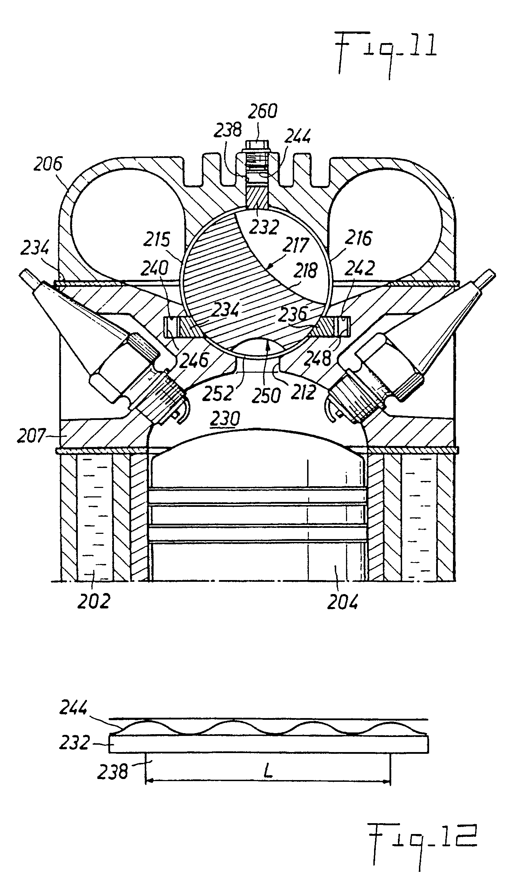

En référence aux figures 11 et 12, on décrit un deuxième perfectionnement au dispositif de distribution selon l'invention objet des figures 1 et 2. Ainsi, on a utilisé le même numéro de référence augmenté de 200, pour les pièces similaires. De ce fait, le piston de compression porte le numéro de référence 204, la chambre de traitement le numéro de référence 230, les deux demi-culasses en céramique les numéros de référence 206, 207, l'élément de distribution rotatif dit roto-distributeur le numéro de référence 217, la lumière du roto-distributeur le numéro de référence 218, les ouvertures d'admission et d'échappement respectivement les numéros de référence 215, 216 et l'ouverture centrale de communication le numéro de référence 212. La canalisation d'admission porte la référence A et la canalisation d'échappement la référence E.

Selon ce second perfectionnement de l'invention, l'élément roto-distributeur 217 est disposé dans la culasse 206, 207 sans ajustage. En outre, ce dispositif comprend un ou avantageusement plusieurs segments 232, 234, 236 d'étanchéité disposés dans des logements respectivement 238, 240, 242 correspondants prévus dans la culasse 206 ou 207.

Selon un mode de réalisation préféré, ces segments d'étanchéité 232, 234, 236 sont appliqués contre l'élément roto-distributeur 217 avec une poussée fournie par un organe de poussée respectivement référencé 244, 246, 248, fournissant une poussée unilatérale, disposé dans ledit logement 238, 240, 242, respectivement.

Selon le mode de réalisation actuellement préféré, tel que représenté, ce dispositif comprend trois segments d'étanchéité 232, 234, 236 disposés à 120° l'un relativement à l'autre.

Avantageusement, chaque segment 232, 234, 236 est plus long que la lumière 218 de distribution qui est symbolisée par la flèche référencée L à la figure 2 afin, cela va de soi, de ne pas tomber en fond de lumière 218 au moment où celle-ci se présente devant les segments.

En outre, chaque organe de poussée 244, 246, 248 peut être formé par une ou plusieurs lamelles, type "Ondulex".

Selon une variante de réalisation, un segment ici 232 est disposé dans la partie supérieure de la culasse 206, de manière à être accessible de l'extérieur, le logement 238 étant alors traversant, ce qui permet de prévoir des moyens 248 de réglage de la poussée exercée par l'organe de poussée 244, par exemple une vis ou similaire.

De préférence, les segments 232, 234, 236 sont réalisés aussi en matériau céramique composite de préférence armé avec des fibres tissées en une dimension choisie parmi le groupe consistant de fibres en carbure de silicium, en carbone ou en oxyde métallique avantageusement un mélange oxyde d'aluminium, oxyde de silicium, oxyde de magnésium $(Al_2O_3\text{-}SiO_2\text{-}MgO)$. Ces fibres sont avantageusement enrobées dans une matrice de préférence choisie parmi le groupe consistant de graphite, de carbone, ou d'un métal tel que le titane ou l'aluminium ou mieux un titanate d'aluminium. Tous ces matériaux de base sont disponibles sur le marché.

De préférence, on peut également prévoir des moyens de résonance 250, par exemple formés par une saignée longitudinale 252, dans le roto-distributeur 217, disposés en regard de l'ouverture centrale 212 lorsque le piston est au point mort haut, comme représenté à la figure 1, et comme décrit en détail dans une autre demande déposée par le demandeur le même jour, ce qui améliore la sécurité de l'étanchéité.

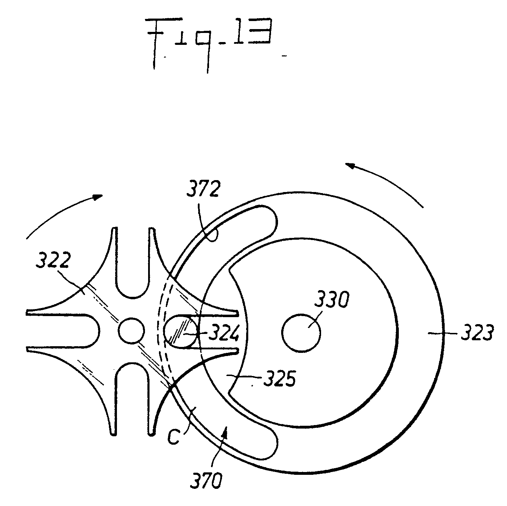

Selon un troisième perfectionnement en référence à la figure 13 pour laquelle les mêmes numéros de référence ont été utilisés pour les pièces ayant la même fonction que celles objet de la figure 7 mais en étant augmentés de 300. Ainsi, la croix de Malte porte le numéro de référence 322 et est actionnée par un tambour 323 comportant un doigt unique dit de croix de Malte 324 disposé dans un évidement 325 du tambour 323. Ce tambour 323 est solidaire d'un arbre 330 commandé en rotation par une poulie crantée similaire à la poulie crantée 27 de la figure 1 qui est reliée directement à l'arbre vilebrequin par une courroie crantée, la vitesse de rotation de cette poulie crantée étant le double de celle du vilebrequin.

Selon ce troisième perfectionnement de l'invention, le dispositif de distribution est caractérisé en ce qu'il comprend des moyens 370 pour faire roter le doigt 324 de la croix de Malte 322, disposés sur le tambour 323 portant le doigt. Selon une caractéristique préférée, ces moyens 370 permettant de faire roter le doigt selon un fragment de circonférence C dont le centre coïncide de préférence avec l'axe de rotation du tambour 323 portant le doigt 324.

Ces moyens pour faire roter sont avantageusement commandés par des moyens de commande (non représentés), réagissant à la vitesse de rotation du moteur. Ces moyens de commande peuvent être constitués par des moyens de commande manuels ou automatiques et inclure par exemple un système optique, un système à dépression, un système centrifuge, un système électromécanique, tous ces moyens de commande étant bien connus à l'homme de l'art de sorte qu'il n'est pas nécessaire de les décrire ici.

Selon un mode de réalisation préféré actuellement, des moyens 370 pour faire roter comprennent un chemin circonférentiel 372 formant came réalisé dans le tambour 323 portant le doigt tandis que le doigt lui-même 324 est réalisé sous forme d'un élément suiveur de came disposé de manière déplaçable dans le chemin circonférentiel 372.

On conçoit ainsi que l'on obtient tous les avantages techniques déterminants précédemment énoncés, à savoir un réglage à volonté de l'avance ou du retard à l'ouverture ou à la fermeture selon le point de rotation où se trouve l'arbre roto-distributeur relativement au doigt de croix de Malte, par simple rotage de ce doigt 324 par les moyens de commande qui réagissent eux-mêmes à la vitesse de rotation du moteur, ce qui permet de réaliser un réglage supplémentaire du fonctionnement du moteur, ou de manière générale du dispositif de distribution.

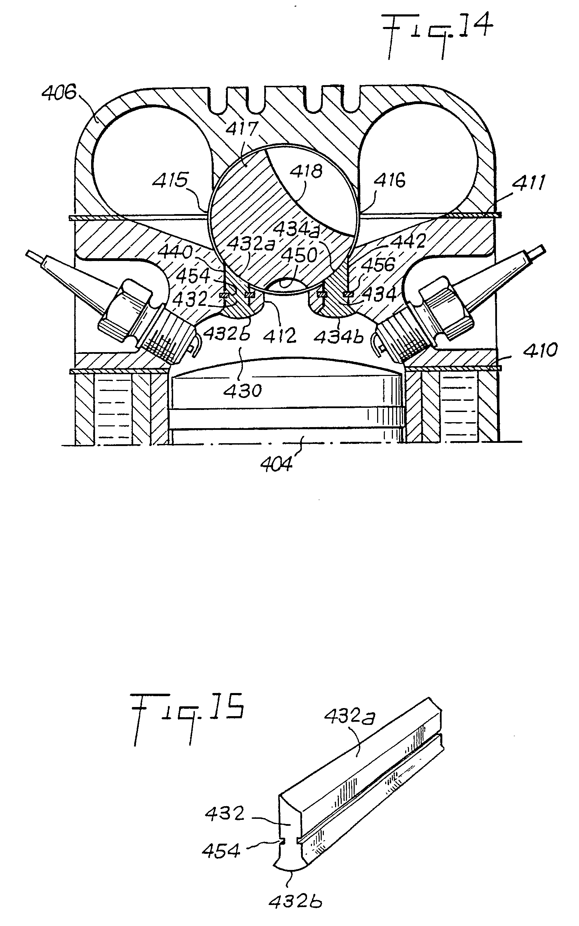

Selon un quatrième perfectionnement de l'invention objet des figures 14 et 15, on a utilisé les mêmes chiffres de référence encore augmentés de 100 pour les pièces similaires. Selon ce quatrième perfectionnement, on a réalisé des segments d'étanchéité 432, 434, disposés dans des logements traversants respectivement 440, 442 de la culasse, de manière à présenter une face respectivement 432a, 434a venant prendre appui contre l'élément roto-distributeur 417 et une face opposée 432b, 434b, respectivement débouchant au sommet de la chambre de traitement 430. Avantageusement, ces segments d'étanchéité sont disposés dans des logements sensiblement parallèles à l'axe de déplacement du piston 404 dans la chambre de traitement 430, c'est-à-dire que les faces apparentes 432b, 434b des segments d'étanchéité 432 et 434 sont disposées sensiblement perpendiculairement à l'axe de déplacement du piston 404.

On comprend ainsi que lorsque le piston 404 remonte vers le point mort haut (PMH), qui est la position représentée à la figure 14, surtout dans le cycle de compression, on obtient une poussée qui s'exerce sur la face apparente 432b, 434b des segments d'étanchéité 432, 434, qui se trouve en contact direct avec la chambre de traitement 430. Etant donné que la poussée est dans ce cas toujours proportionnelle à la compression des gaz contenus dans la chambre de traitement 430, l'étanchéité sera parfaite au niveau du roto-distributeur car les segments d'étanchéité appliqueront cette même poussée sur le roto-distributeur 417.

Cette pression ou poussée s'exerce aux deux points morts hauts (compression et détente) pendant lesquels l'élément roto-distributeur 417 est en position d'arrêt. Pendant la rotation de ce dernier, le piston 404 est en position de détente, le freinage exercé par les segments 432, 434 sur l'élément roto-distributeur 417 sera minimum. Ces segment d'étanchéité sont avantageusement constitués en céramique structurale composite comme décrit pour les segments d'étanchéité du mode de réalisation des figures 12 et 13. On préfère des segments d'étanchéité réalisés en céramique structurale composite à matrice carbone-graphite armée de fibres en carbure de silicium monodirectionnelles disposées dans le sens de la longueur.

Les segments d'étanchéité 432, 434 sont solidarisés à la culasse 406 de manière classique. Ils peuvent comporter des rainures 454 dans lesquelles viennent se loger des clavettes 456.

Grâce à ce perfectionnement, on obtient une amélioration d'étanchéité entre l'élément roto-distributeur 417 et la culasse 406 en particulier au moment essentiel où la compression est très forte, c'est-à-dire lorsque le piston 404 est au point mort haut que ce soit dans le cycle de compression ou dans le cycle de détente.

Naturellement, l'invention comprend tous les moyens constituant des équivalents techniques des moyens décrits ainsi que leurs diverses combinaisons. Il va de soi que tous les perfectionnements peuvent être utilisés selon diverses combinaisons. En outre, tous les dispositifs objet des figures 1 à 15 peuvent être utilisés pour la distribution des moteurs à combustion interne ou des compresseurs à piston, incluant les pompes ou même des appareils à fonctionnement par pulsions, notamment des pulso-réacteurs.

Des exemples précis des compositions des matières céramiques peuvent être constitués par les exemples donnés dans les demandes de brevets antérieurs : FR-85.19436 ou FR-84.14800.

Les proportions relatives des composants peuvent varier dans de larges limites pourvu que les céramiques présentent les propriétés indispensables précédemment énoncées, ce qui peut être déterminé aisément par l'homme du métier.

Dans le contexte de la description, le terme "roter" est équivalent à "déplacer" dans l'expression "moyens pour faire roter".

## Revendications

1.  Dispositif céramique de distribution forcée d'un fluide depuis une canalisation dite d'admission à une canalisation dite d'échappement par l'intermédiaire d'une chambre de traitement pouvant comprendre une compression, comprenant un élément distributeur (17) monté rotatif dans un élément de culasse (7) qui comporte au moins trois ouvertures non alignées communiquant entre elles, dont une ouverture (15) d'admission communiquant librement avec la canalisation d'admission, une ouverture intermédiaire (12) communiquant librement avec ladite chambre de traitement (30) et une ouverture d'échappement (16) communiquant librement avec la canalisation d'échappement, ledit élément distributeur (17) comprenant une lumière (18) ne donnant accès à la chambre de traitement lors de sa rotation qu'à une seule canalisation à la fois, ainsi que des moyens de commande (22, 23), en rotation, caractérisé en ce que l'élément de culasse(7) est réalisé en un premier matériau céramique composite armé de fibres en structure trois dimensions; et l'élément distributeur (17) est réalisé en un second matériau céramique composite armé de fibres orientées bidimensionnellement.

2.  Dispositif selon la revendication 1, caractérisé en ce que les fibres du premier matériau céramique composite sont choisies parmi le groupe consistant de fibres de carbure de silicium, de carbure de silicium et de titane, de bore, de carbone, ou leurs mélanges, ces fibres étant enrobées dans une matrice choisie parmi le groupe consistant avantageusement de carbure de silicium, de graphite, de carbone ou leurs mélanges.

3.  Dispositif selon la revendication 1 ou 2, caractérisé en ce que les fibres orientées bidimensionnellement du second matériau céramique et sont choisies parmi le groupe consistant de fibres de carbure de silicium, de zircone, d'alumine ($Al_2O_3$), ou de mélange d'oxyde d'aluminium et d'oxyde de silicium ($Al_2O_3$-$SiO_2$).

4.  Dispositif selon l'une des revendications 1 à 3, caractérisé en ce que le premier matériau céramique composite précité a une densité comprise entre 1 et 1,5.

5.  Dispositif selon l'une des revendications 1 à 4, caractérisé en ce que le second matériau céramique composite précité a une densité comprise entre 1,5 et 2.

6.  Dispositif selon l'une des revendications 1 à 5, caractérisé en ce que l'élément distributeur (117) comprend des moyens de résonance (150) disposés en coïncidence avec l'ouverture de communication avec la chambre de traitement (130) lorsque le piston (104) est au point mort haut (PMH), juste avant la détente.

7.  Dispositif selon la revendication 6, caractérisé en ce que les moyens de résonance précités (150) comprennant une saignée (152) ou cavité de résonance.

8.  Dispositif selon la revendication 7, caractérisé en ce que la forme de la saignée ou de la cavité de résonance (152) est essentiellement parabolique.

9.  Dispositif selon la revendication 7 ou 8, caractérisé en ce que les moyens de résonance (150) sont disposés dans le sens longitudinal de l'élément distributeur (117).

10. Dispositif selon l'une quelconque des revendications 1 à 9, caractérisé en ce que l'élément roto-distributeur (217) est disposé dans la culasse (206, 207) sans ajustage, et en ce qu'il comprend un ou avantageusement plusieurs segments d'étanchéité (232, 234, 236) disposés dans des logements correspondants (238, 240, 242) prévus dans la culasse (206 ou 207).

11. Dispositif selon la revendication 10, caractérisé en ce que Les segments précités sont appliqués contre l'élément roto-distributeur (217) avec une poussée fournie par un organe de poussée unilatérale (244, 246, 248) disposé dans ledit logement.

12. Dispositif selon la revendication 10 ou 11, caractérisé en ce qu'il comprend trois segments d'étanchéité (232, 234, 236) disposés à 120° l'un par rapport à l'autre.

**13.** Dispositif selon l'une quelconque des revendications 10 à 12, caractérisé en ce qu'un segment (232) est disposé dans la partie supérieure de la culasse (206), de manière à être accessible de l'extérieur, l'organe de poussée (244) associé à celui-ci comprend des moyens (260) de réglage de la poussée, par exemple une vis.

**14.** Dispositif selon l'une quelconque des revendications 10 à 13, caractérisé en ce que les segments précités (232, 234, 236) sont réalisés en un matériau céramique composite comprenant des fibres tissées en une dimension choisies parmi le groupe consistant de fibres de carbure de silicium, de carbone, ou de mélanges d'oxyde métallique, mieux un mélange d'alumine-oxyde de silicium-oxyde de magnésium ($Al_2O_3$-$SiO_2$-$MgO$) avec une matrice avantageusement choisie parmi le groupe consistant de graphite, de carbone, ou d'un métal, mieux l'aluminium, le titane ou un titanate d'aluminium.

**15.** Dispositif selon l'une quelconque des revendications 10 à 14, caractérisé en ce que l'organe de poussée précité (244, 246, 248) est formé par une ou plusieurs lames ondulées.

**16.** Dispositif selon l'une quelconque des revendications 1 à 15 caractérisé en ce que les moyens de commande en rotation précités (22,23 ; 322,323) comprennent un ensemble mécanique à croix de malte comprenant un doigt unique (24 , 324) de croix de Malte porté par un tambour (23, 323) , de manière à réaliser une rotation discontinue de l'élément roto-distributeur (17,117 ou 217)

**17.** Dispositif selon la revendication 16 , caractérisé en ce qu'il comprend des moyens (370) disposés sur le tambour (323) portant le doigt (324) de la croix de Malte pour déplacer ledit doigt (324) par rapport au tambour.

**18.** Dispositif selon la revendication 17, caractérisé en ce que ces moyens (370) permettent de faire déplacer le doigt (324) selon un fragment de circonférence dont le centre coïncide de préférence avec l'axe de rotation du tambour (323) portant le doigt (324).

**19.** Dispositif selon la revendication 17 ou 18, caractérisé en ce que les moyens (370) pour faire déplacer sont commandés par des moyens de commande réagissant à la vitesse de rotation du tambour.

**20.** Dispositif selon l'une quelconque des revendications 17 à 19, caractérisé en ce que les moyens précités (370) pour faire déplacer comprennent un chemin circonférentiel (372) formant came réalisé dans le tambour (323) tandis que le doigt (324) est réalisé sous forme d'un élément suiveur de came disposé de manière déplaçable dans le chemin circonférentiel (372).

**21.** Dispositif selon l'une quelconque des revendications 19 ou 20, caractérisé en ce que les moyens de commande précités sont soit des moyens de commande manuelle, soit des moyens de commande automatique comprenant par exemple un système optique, un système à dépression, un système centrifuge ou un système électromécanique.

**22.** Dispositif selon l'une des revendications 10 à 14 à 20 caractérisé en ce que les segments d'étanchéité (432, 434) prennent appui sur l'élément roto-distributeur (417) et débouchent par une face (432b, 434b) dans la chambre de traitement (430), en étant de préférence disposé parallèlement à l'axe de déplacement du piston (404).

**23.** Utilisation du dispositif selon l'une quelconque des revendications 1 à 22 pour la distribution des moteurs à combustion interne.

**24.** Utilisation du dispositif selon l'une des revendications 1 à 22 pour la distribution de compresseurs à pistons.

**25.** Utilisation du dispositif selon l'une des revendications 1 à 22 pour la distribution d'appareils à fonctionnement par pulsion, notamment des pulso-réacteurs.

**Claims**

**1.** A ceramic device for the forced delivery of a fluid from a line termed intake line to a line termed exhaust line via a processing chamber which may comprise a compression stage, comprising a delivery element (17) mounted for rotation in a head element (7) comprising at least three non-aligned intercommunicating ports, one intake port (15) thereof freely communicating with the intake line, one intermediate port (12) freely communicating with the said processing chamber (30) and an exhaust port (16) freely communicating with the exhaust line, the said delivery element (17) comprising a cut out (18) only giving access during its rotation to the processing chamber to one line at a time, as well as rotary control means (22, 23), characterized in that the head element (7) is made of a first composite ceramic material reinforced by fibres in a three dimensional structure; and the delivery element (17) is made of a second composite ceramic material reinforced by fibres in a two dimensional orientation.

2. A device according to claim 1, characterized in that the fibres of the first composite ceramic material are chosen from the group consisting of fibres of silicon carbide, silicon and titanium carbide, boron, carbon, or their mixtures, these fibres being embedded in a matrix chosen from the group advantageously consisting of silicon carbide, graphite, carbon or their mixtures.

3. A device according to claim 1 or 2, characterized in that the two dimensionally orientated fibres of the second composite ceramic material are chosen from the group consisting of fibres of silicon carbide, zircon, alumina ($Al_2O_3$) or of a mixture of aluminium oxide and silicon oxide ($Al_2O_3$-$SiO_2$).

4. A device according to one of claims 1 to 3, characterized in that the above mentioned first composite ceramic material has a density comprised between 1 and 1.5.

5. A device according to one of claims 1 to 4 characterized in that the above mentioned second composite ceramic material has a density comprised between 1.5 and 2.

6. A device according to one of claims 1 to 5, characterized in that the delivery element (117) comprises resonance means (150) disposed to coincide with the opening communicating with the processing chamber (130) when the piston (104) is at the top dead centre (PMH) just before the expansion.

7. A device according to claim 6, characterized in that the above mentioned resonance means (150) comprise a resonance cut out or cavity (152).

8. A device according to claim 7, characterized in that the shape of the cut out or resonance cavity (152) is in essence parabolic.

9. A device according to claim 7 or 8, characterized in that the resonance means (150) are disposed in the longitudinal direction of the delivery element (117).

10. A device according to any one of claims 1 to 8, characterized in that the rotary delivery element (217) is disposed in the head (206, 207) without adjustment and in that it comprises one or advantageously several sealing rings (232, 234, 236) disposed in corresponding recesses (238, 240, 242) provided in the head (206 or 207).

11. A device according to claim 10, characterized in that the above mentioned rings are applied against the rotary delivery element (217) with a thrust provided by a unilateral thrust element (244, 248, 248) disposed in the said recess.

12. A device according to claim 10 or 11, characterized in that it comprises three sealing rings (232, 234, 236) disposed at 120° with respect to each other.

13. A device according to any one of claims 10 to 12, characterized in that one ring (232) is disposed in the upper part of the head (206) so as to be accessible from the outside; the thrust element (244) associated therewith comprises means (260) for adjusting the thrust, for example, a screw.

14. A device according to any one of claims 10 to 13, characterized in that the above mentioned rings (232, 234, 236) are made of a composite ceramic material comprising fibres fabricated in one dimension, chosen from the group consisting of fibres of silicon carbide, carbon, or of metallic oxide mixtures, preferably a mixed aluminium-silicon-magnesium oxide ($Al_2O_3$-$SiO_2$-$MgO$) with a matrix advantageously chosen from the group consisting of graphite, carbon, or of a metal, preferably aluminium, titanium or aluminium titanate.

15. A device according to any one of claims 10 to 14, characterized in that the above mentioned thrust element (244, 246, 248) is formed by one or several corrugated sheets.

16. A device according to any one of claims 1 to 15, characterized in that the above mentioned rotary control means (22, 23; 322, 323) comprise a mechanical Maltese cross assembly comprising a single Maltese cross finger (24, 324) carried by a drum (23, 323) so as to obtain a discontinuous rotation of the rotary delivery element (17, 117 or 217).

17. A device according to claim 16, characterized in that it comprises means (370) disposed on the drum (323) carrying the finger (324) of the Maltese cross for displacing the said finger (324) relative to the drum.

18. A device according to claim 17, characterized in that these means (370) allow the finger (324) to be displaced along a circumferential portion whose centre preferably coincides with the axis of rotation of the drum (323) carrying the finger (324).

19. A device according to claim 17 or 18, characterized in that the displacement means (370) are controlled by control means reacting to the speed of rotation of the drum.

20. A device according to any one of claims 17 to 19, characterized in that the above mentioned displacement means (370) comprise a circumferential track (372) forming a cam formed in the drum (323), while the finger (324) is obtained in the form of a cam follower element disposed in a displaceable manner in the circumferential track (372).

21. A device according to any one of claims 19 or 20, characterized in that the above mentioned control means are either manual control means or automatic control means comprising, for example, an optical system, a low pressure system, a centrifugal system or an electro-mechanical system.

22. A device according to one of claims 10 to 14 to 20, characterized in that the sealing rings (432, 434) bear on the rotary delivery element (417) and issue via a face (432b, 434b) in the processing chamber (430) being preferably disposed parallel to the axis of displacement of the piston (404).

23. Use of the device according to any one of claims 1 to 22 for supplying internal combustion engines.

24. Use of the device according to one of claims 1 to 22 for supplying piston compressors.

25. Use of the device according to one of claims 1 to 22 for supplying pulse-based engines, in particular, pulse-jets.

**Ansprüche**

1. Keramische Einrichtung zur Zwangsverteilung eines Fluids von einem Zuleitungskanal zu einem Ableitungskanal unter Zwischenschaltung einer gegebenenfalls unter Druck stehenden Behandlungskammer, umfassend ein Verteilerelement (17), das drehbar in einem Kopfelement (7) gelagert ist, welches mindestens drei miteinander kommunizierende, aber nicht fluchtende Öffnungen aufweist, von denen eine Zuführöffnung (15) mit dem Zuleitungskanal frei kommuniziert, eine Zwischenöffnung (12) mit der Behandlungskammer (30) frei kommuniziert und eine Austrittsöffnung (16) mit dem Ableitungskanal frei kommuniziert, wobei das Verteilerelement (17) ein Langloch (18), das der Behandlungskammer bei dessen Rotation Zutritt stets nur zu einem einzigen Kanal gibt, sowie Rotationssteuermittel (22, 23) umfaßt, dadurch gekennzeichnet, daß das Kopfelement (7) aus einem ersten, mit Fasern dreidimensionaler Struktur armierten keramischen Verbundwerkstoff hergestellt ist und das Verteilerelement (17) aus einem zweiten, mit zweidimensional gerichteten Fasern armierten keramischen Verbundmaterial hergestellt ist.

2. Vorrichtung nach Anspruch 1, dadurch gekennzeichnet, daß die Fasern des ersten keramischen Verbundwerkstoffs ausgewählt sind aus der Gruppe bestehend aus Fasern aus Siliziumkarbid, Silizium- und Titankarbid, Bor, Kohlenstoff oder Mischungen davon, wobei diese Fasern in einer Matrix eingehüllt sind, die ausgewählt ist aus der Gruppe vorteilhafterweise bestehend aus Siliziumkarbid, aus Grafit, aus Kohlenstoff oder Mischungen davon.

3. Vorrichtung nach Anspruch 1 oder 2, dadurch gekennzeichnet, daß die zweidimensional gerichteten Fasern des zweiten keramischen Werkstoffs ausgewählt sind aus der Gruppe bestehend aus Fasern aus Siliziumkarbid, Zirkon, Aluminiumoxid ($Al_2O_3$) oder der Mischung von Aluminiumoxid und Siliziumoxid ($Al_2O_3$-$SiO_2$).

4. Vorrichtung nach einem der Ansprüche 1 bis 3, dadurch gekennzeichnet, daß der erste keramische Verbundwerkstoff eine Dichte zwischen 1 und 1,5 aufweist.

5. Vorrichtung nach einem der Ansprüche 1 bis 4, dadurch gekennzeichnet, daß der zweite keramische Verbundwerkstoff eine Dichte zwischen 1,5 und 2 aufweist.

6. Vorrichtung nach einem der Ansprüche 1 bis 5, dadurch gekennzeichnet, daß das Verteilerelement (117) Resonanzmittel (150) umfaßt, die bei im oberen Totpunkt (PMH) befindlichem Kolben (104) gerade vor der Entspannung sich deckend mit der Kommunikationsöffnung zur Behandlungskammer (130) angeordnet sind.

7. Vorrichtung nach Anspruch 6, dadurch gekennzeichnet, daß die Resonanzmittel (150) einen Resonanzeinschnitt (152) oder -hohlraum umfassen.

8. Vorrichtung nach Anspruch 7, dadurch gekennzeichnet, daß die Form des Resonanzeinschnitts (152) oder -hohlraums im wesentlichen parabelförmig ist.

9. Vorrichtung nach Anspruch 7 oder 8, dadurch gekennzeichnet, daß die Resonanzmittel (150) in Längsrichtung des Verteilerelements (117) angeordnet sind.

10. Vorrichtung nach einem der Ansprüche 1 bis 9, dadurch gekennzeichnet, daß das Rotationsverteilerelement (217) im Kopfelement (206, 207) ohne Justierung angeordnet ist, und daß es ein oder vorteilhafterweise mehrere Dichtsegmente (232, 234, 236) aufweist, welche in entsprechenden im Kopf (206 oder 207) vorgesehenen Aufnahmen (238, 240, 242) angeordnet sind.

11. Vorrichtung nach Anspruch 10, dadurch gekennzeichnet, daß die Dichtsegmente mit einer Druckkraft am Rotationsverteilerelement (217) angepreßt sind, die von einem in der Aufnahme angeordneten Organ für einseitigen Druck (244, 246, 248) geliefert wird.

12. Vorrichtung nach Anspruch 10 oder 11, dadurch gekennzeichnet, daß sie drei um 120° zueinander angeordnete Dichtelemente (232, 234, 236) umfaßt.

13. Vorrichtung nach einem der Ansprüche 10 bis 12, dadurch gekennzeichnet, daß ein Segment (232) im oberen Teil des Kopfelements (206) derart angeordnet ist, daß es von außen zugänglich ist, wobei das diesem zugehörige Druckorgan (244) Mittel (260) zur Regulierung der Druckkraft, z.B. eine Schraube, umfaßt.

14. Vorrichtung nach einem der Ansprüche 10 bis 13, dadurch gekennzeichnet, daß die Dichtsegmente (232, 234, 236) aus einem keramischen Verbundwerkstoff mit in Dimension gewebten Fasern, ausgewählt aus der Gruppe bestehend aus Fasern aus Siliziumkarbid, Kohlenstoff oder Metalloxidmischungen, besser einer Mischung aus Aluminiumoxid-Siliziumoxid-Magnesiumoxid ($Al_2O_3$-$SiO_2$-MgO) mit einer Matrix, vorteilhafterweise ausgewählt aus der Gruppe bestehend aus Grafit, Kohlenstoff oder einem Metall, besser Aluminium, Titan oder einem Aluminiumtitanat, hergestellt sind.

15. Vorrichtung nach einem der Ansprüche 10 bis 14, dadurch gekennzeichnet, daß das Druckorgan (244, 246, 248) durch ein oder mehrere gewellte Blättchen gebildet ist.

16. Vorrichtung nach einem der Ansprüche 1 bis 15, dadurch gekennzeichnet, daß die Rotationssteuermittel (22, 23; 322, 323) einen Mechanismus mit Sternradgetriebe mit einem einzigen von einer Trommel (23, 323) getragenen Sternradgetriebestift (24, 324) umfassen, sodaß eine diskontinuierliche Rotation des Rotationsverteilerelements (17, 117 oder 217) bewirkt wird.

17. Vorrichtung nach Anspruch 16, dadurch gekennzeichnet, daß sie auf der den Stift (324) des Sternradgetriebes tragenden Trommel (323) vorgesehene Mittel (370) zum Verschieben des Stiftes (324) gegenüber der Trommel umfaßt.

18. Vorrichtung nach Anspruch 17, dadurch gekennzeichnet, daß diese Mittel (370) eine Verschiebung des Stiftes (324) entlang eines Umfangbereichs, dessen Mittelpunkt vorzugsweise mit der Rotationsachse der den Stift (324) tragenden Trommel (323) zusammenfällt, zulassen.

19. Vorrichtung nach Anspruch 17 oder 18, dadurch gekennzeichnet, daß die Verschiebemittel (370) durch auf die Rotationsgeschwindigkeit der Trommel reagierende Steuermittel gesteuert sind.

20. Vorrichtung nach einem der Ansprüche 17 bis 19, dadurch gekennzeichnet, daß die Verschiebemittel (370) eine eine Nocke in der Trommel (323) bildende Umfangsbahn (372) aufweisen, wobei der Stift (324) als Nockennachläufer ausgebildet ist, welcher verschiebbar in der Umfangsbahn (372) angeordnet ist.

21. Vorrichtung nach einem der Ansprüche 19 oder 20, dadurch gekennzeichnet, daß die Steuermittel entweder Mittel zur manuellen Steuerung oder Mittel zur automatischen Steuerung mit beispielsweise einem optischen System, einem Unterdrucksystem, einem Zentrifugalsystem oder einem elektromechanischen System sind.

22. Vorrichtung nach einem der Ansprüche 10 bis 14 bis 20, dadurch gekennzeichnet, daß die Dichtsegmente (432, 434) auf dem Rotationsverteilerelement (417) in Anlage kommen und mit einer Fläche (432b, 434b) in die Behandlungskammer (430) münden, wobei sie vorzugsweise parallel zur Verschiebeachse des Kolbens (404) angeordnet sind.

23. Verwendung der Vorrichtung nach einem der Ansprüche 1 bis 22 zur Versorgung von Verbrennungsmotoren.

24. Verwendung der Vorrichtung nach einem der Ansprüche 1 bis 22 zur Versorgung von Kolbenkompressoren.

25. Verwendung der Vorrichtung nach einem der Ansprüche 1 bis 22 zur Versorgung von pulsierend arbeitenden Apparaten, insbesondere Pulsostrahltriebwerken.

Fig-1

Fig-2

Fig-3

Fig-4

Fig-5

Fig-6

_Fig-7_

_Fig-8_

_Fig-9_

Fig.10

Fig. 11

Fig. 12

# Fig.13

Fig.14

Fig.15